# EUROPÄISCHE PATENTANMELDUNG

(11) **EP 3 412 956 A1**
(43) Veröffentlichungstag der Anmeldung: **12.12.2018**
(21) Anmeldenummer: 18405013.6
(22) Anmeldetag: 05.06.2018
(51) Int. Cl.: F16M 11/24, F16M 11/28, F16M 11/38, G09F 15/00, E01F 9/688, E01F 9/654

(54) **ZUSAMMENLEGBARES STATIV**

(30) Priorität: 09.06.2017 DE 202017003053 U
(71) Anmelder: Acquaalta Schutzsysteme GmbH, 9555 Müllheim (CH)
(72) Erfinder: Sager, Bruno, 8555 Müllheim (CH)
(74) Vertreter: Wagner, Wolfgang Heribert

(57) **Zusammenfassung**

Bei einem zusammenlegbaren Stativ, insbesondere zur Aufstellung von Warnsignalen u.ä. an Strassen, ist an einem Tragrohr (1) eine Gleithalterung (2) verschiebbar gelagert, an der drei abspreizbare Beine (4a,b,c) angelenkt sind, welche von einem Mantel (6) aus flexiblem, elastisch dehnbarem Material umspannt sind. Ein unteres Ende des Tragrohrs (1) ist durch dort angelenkte Streben (5a;b;c) mit den Beinen (4a,b,c) verbunden, sodass ein Hochziehen des Tragrohrs (1) gegenüber der Gleithalterung (2) ein Spreizen der Streben (5a,b,c) und damit ein Abspreizen der Beine (4a,b,c) bewirkt. Das obere Ende des Tragrohrs (1) erreicht so bei geringer Länge des Stativs im zusammengelegten Zustand eine ziemlich grosse Höhe über dem Boden, sodass ein dort befestigtes Anzeige- oder ähnliches Element gut sichtbar ist. Im Tragrohr (1) können verschiedene Zusatzteile wie ausziehbare Teleskopstangen (7a,b), ein zusammengerolltes oder -gefaltetes Anzeigeelement, ein Leuchtelement oder ein Ballaststab untergebracht sein.

## Beschreibung

### Technisches Gebiet

Die Erfindung betrifft ein zusammenlegbares Stativ, wie es bei der Aufstellung von transportablen Signalen an Strassen und öffentlichen Plätzen, insbesondere an Baustellen und Umleitungen, bei Unfällen usw. zum Einsatz kommt.

### Stand der Technik

Gattungsgemässe Stative sind seit langer Zeit bekannt. So wurde in CH-B-374 576 ein derartiges Stativ vorgeschlagen, bei welchem die Streben jeweils an der Gleithalterung des Mittelteils angelenkt sind, die von einer Druckfeder mit einer gegen ein unteres Ende des Tragrohrs wirkenden Kraft beaufschlagt ist, während die inneren Enden der Beine nahe dem oberen Ende desselben unmittelbar am Tragrohr angelenkt sind. Beim Zusammenlegen des Stativs wird die Gleithalterung gegen die Federkraft an das obere Ende des Tragrohrs geschoben, wobei sich Beine und Streben an das Tragrohr anlegen. Ein ähnliches Stativ, bei welchem beim Zusammenlegen die Gleithalterung nach unten geschoben wird, ist GB-A-2 291 672 zu entnehmen.

Beim erstgenannten Stativ kann lediglich an den Beinen ein Anzeigeelement, ein pyramidenförmiger Überzug, der über das Stativ gezogen wird, befestigt werden, das gewöhnlich nur knapp über dem Boden liegt und daher oft schlecht sichtbar ist.

### Darstellung der Erfindung

Der Erfindung liegt die Aufgabe zugrunde, ein gattungsgemässes Stativ anzugeben, welches in einem Einsatzzustand verhältnismässig hoch, aber gleichwohl in einem zusammengelegten Lagerzustand kurz ist. Diese Aufgabe wird durch die Erfindung, wie sie in den Ansprüchen gekennzeichnet ist, gelöst.

Die Erfindung schafft ein Stativ, bei welchem - ausschliesslich oder zusätzlich - ein Anzeigeelement oder anderes Element, z.B. ein Leuchtelement, ohne weiteres in grösserer Höhe über dem Boden angebracht werden kann. Solche Elemente sind daher besser sichtbar, vor allem sind sie auch dann noch zu sehen, wenn zwischen dem Stativ und dem Betrachter Hindernisse liegen, die die Sicht auf ein bodennahes Anzeigeelement beeinträchtigen. Trotzdem ist das Stativ zusammengelegt ziemlich kurz, was bei dem knappen Platzangebot in Einsatzfahrzeugen von Vorteil ist. Das Abspreizen der Beine ist ausserdem zwangsläufig mit einem Hochschieben des Tragrohrs verbunden, was das Aufstellen des Stativs sehr vereinfacht.

### Kurze Beschreibung der Zeichnungen

Im folgenden wird die Erfindung anhand von Figuren, welche lediglich ein Ausführungsbeispiel darstellen, näher erläutert. Es zeigen
- Fig. 1: das Stativ im Einsatzzustand, und
- Fig. 2: das Stativ im Lagerzustand, d.h. zusammengelegt.

### Wege zur Ausführung der Erfindung

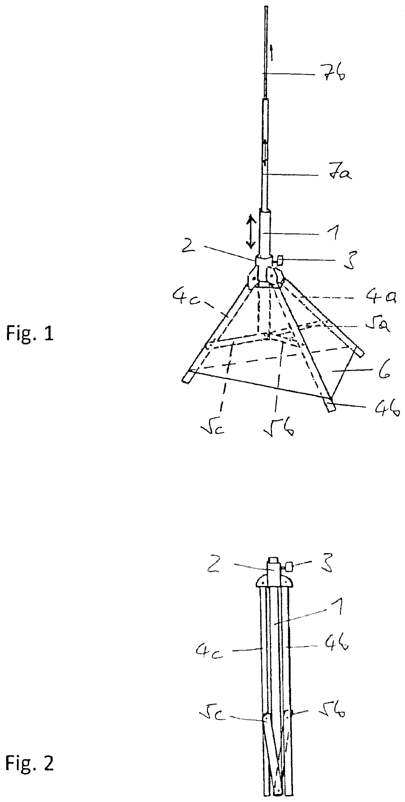

Das Stativ umfasst ein Mitteilteil mit einer Tragstange, welche hohl, d.h. als Tragrohr 1 ausgebildet ist und einer ringförmig das Tragrohr 1 umgebenden Gleithalterung 2, die längs des Tragrohrs 1 verschiebbar ist. Die Gleithalterung 2 ist mit einer Arretierung 3 versehen, im Beispiel einer Schraube in einer Gewindebohrung der Gleithalterung 2, welche eingedreht gegen das Tragrohr 1 drückt und die Gleithalterung 2 wenn nötig im in Fig. 1 gezeigten Einsatzzustand des Stativs in einer von einem oberen Ende des Tragrohrs 1 entfernten Position und im in Fig. 2 gezeigten Lagerzustand nahe dem oberen Ende des Tragrohrs 1, aber auch in Zwischenpositionen am Tragrohr 1 fixieren kann.

Die Gleithalterung 2 weist drei radial abstehende Fortsätze auf, an denen innere Enden von drei gleichen klappbaren Beinen 4a,b,c angelenkt sind, während deren gegenüberliegende äussere Enden frei sind und der Abstützung des Stativs auf dem Boden oder einer anderen Stützfläche dienen. Innere Enden von gleichen Streben 5a,b,c sind im Bereich von dessen unterem Ende am Tragrohr 1 angelenkt, während gegenüberliegende äussere Enden an den Beinen 4a;b;c angelenkt sind. Die Anlenkpunkte der Streben 5a,b,c an den Beinen 4a;b;c sind jeweils von deren äusseren Enden etwa um die Länge der Streben 5a,b,c entfernt, sodass die unteren Enden des Tragrohrs 1, der Beine 4a,b,c und der Streben 5a,b,c im Lagerzustand (Fig. 2), in dem das Tragrohr 1, die Beine 4a,b,c und die Streben 5a,b,c annähernd parallel aneinander anliegen, bündig sind und das zuammengelegte Stativ mithin möglichst kurz ist.

Die Beine 4a,b,c sind von einem Mantel 6 (in Fig. 2 weggelassen) umgeben, der die Form des Mantels eines Pyramidenstumpfs hat und von einem oberen Rand, der eine knapp unterhalb der Gleithalterung 2 liegende obere Öffnung umgibt, bis nahe an die äusseren Enden der Beine 4a,b,c reicht. Der Mantel 6 besteht aus einem flexiblen Material, z.B. einem Gewebe oder einer Folie, sodass der Mantel 6 im Lagerzustand leicht zusammengefaltet werden kann. Das Material ist ausserdem mindestens geringfügig elastisch dehnbar. Der Mantel 6 kann fest oder lösbar mit den Beinen 4a,b,c verbunden sein.

Die Lage des Tragrohrs 1 relativ zur Gleithalterung 2 und der Grad der Spreizung der Beine 4a,b,c sind miteinander gekoppelt. Beim Aufstellen des Stativs, d.h. beim Übergang vom Lagerzustand (Fig. 2) zum Einsatzzustand (Fig. 1) bewirkt ein Hochziehen des Tragrohrs 1 gegenüber der Gleithalterung 2, allenfalls nach Lösen der Arretierung 3, zugleich ein Wegspreizen der Beine 4a,b,c vom Tragrohr 1. Umgekehrt bewirkt ein Spreizen der Beine 4a,b,c ein Hochschieben des Tragrohrs 1.

Die Abmessungen des Mantels 6 sind so gewählt, dass er bei maximaler Spreizung der Beine 4a,b,c, d.h. wenn die Streben 5a,b,c mit dem Tragrohr 1 einen rechten Winkel einschliessen, leicht elastisch gedehnt ist, sodass bei weiterem Hochziehen des Tragrohrs 1 und entsprechender Abnahme der Spreizung eine Entspannung eintritt. Das Stativ wird daher ohne weiteres im Einsatzzustand, in dem das Tragrohr 1 sich in einer Stellung befindet, in der die dort angelenkten inneren Enden der Streben 5a,b,c etwas höher liegen als ihre äusseren Enden, festgehalten, da einem Absenken des Tragrohrs 1 wegen der dafür erforderlichen elastischen Dehnung des Mantels 6 ein Widerstand entgegenwirkt, der nur durch einigen Kraftaufwand überwindbar ist.

Die Aufstellung des Stativs ist daher sehr einfach und mit wenigen Handgriffen zu bewerkstelligen. Dies gilt auch für das Zusammenlegen des Stativs, d.h. den Übergang vom Einsatzzustand in den Lagerzustand.

Statt des Mantels 6 oder zusätzlich können auch etwa die Streben 5a,b,c elastisch deformierbar ausgebildet sein. Entscheidend ist, dass die aus den Beinen 4a,b,c, den Streben 5a,b,c und dem Mantel 6 bestehende Struktur bei maximaler Spreizung der Beine 4a,b,c leicht elastisch deformiert ist, derart, dass bei nachlassender Spreizung der Beine 4a,b,c - durch Verschieben des Tragrohrs 1 nach oben oder unten - die Deformation abnimmt. Statt des Mantels können auch anders ausgebildete Verbindungselemente eingesetzt werden, z.B. jeweils benachbarte Beine verbindende Bänder oder Zugfedern.

Der Übergang vom Lagerzustand in den Einsatzzustand kann durch eine Druck- oder Zugfeder unterstützt werden, die die Gleithalterung mit einer gegen das untere Ende des Tragrohrs gerichteten Kraft beaufschlagt.

Im Einsatzzustand liegt das obere Ende des Tragrohrs 1 mit Abstand über der Gleithalterung 2, an der die Beine 4a,b,c angreifen und damit ziemlich hoch über dem Boden. Ein am oberen Ende des Tragrohrs 1 angebrachtes Anzeigeelement oder Leuchtelement ist daher gut sichtbar, auch aus grösserer Entfernung und wenn kleinere Hindernisse zwischen dem Stativ und dem Betrachter liegen. Dessen ungeachtet können auch an den Beinen 4a,b,c Anzeigeelemente, z.B. aus Gewebe oder Folie, angebracht sein, wie dies z.B. aus CH-B-374 576 oder CH-A-688 167 bekannt ist. Auch können die Felder des Mantels 6 bedruckt sein.

Im Inneren des Tragrohrs 1 kann eine Teleskopstange untergebracht sein oder auch, wie in Fig. 1 gezeigt, zwei verschachtelte Teleskopstangen 7a,b oder mehr, die im Einsatzzustand ausgezogen sind und eine beträchtliche Höhe erreichen. Es ist aber auch möglich, im Tragrohr 1 ein Anzeigeelement unterzubringen, das beim Aufstellen des Stativs aus dem Tragrohr 1 gezogen und an demselben befestigt wird, z.B. ein zusammengerolltes oder zusammengelegtes geeignet bedrucktes Stück Gewebe oder Folie oder auch ein zusammengerolltes Element aus seitlich miteinander verbundenen stabartigen Teilen.

Zusätzlich können, wie oben angedeutet, auch Anzeigeelemente vorgesehen sein, welche sich besonders für eine Anbringung auf einem zwischen zwei benachbarten der Beine 4a,b,c liegenden Feld des Mantels 6 eignen. Ein solches Anzeigeelement umfasst vorzugsweise ein geeignet bedrucktes dreieckiges Stück flexiblen Materials, dessen Grösse mindestens der Grösse des Feldes entspricht und weist an einem oberen Ende einen Haken auf, welcher in die obere Öffnung des Mantels 6 eingreift und an einem gegenüberliegenden unteren Rand einen sich über die Länge des Randes erstreckenden Randstab, welcher vorzugsweise elastisch biegsam und an seinen Enden gegabelt ist, sodass er derart zwischen die benachbarten Beine 4a,b, 4b,c oder 4c,a geschoben werden kann, dass jedes der gegabelten Enden eines der beiden Beine umgreift. Das Stück flexiblen Materials kann auf den Randstab aufgewickelt und das Anzeigeelement im Tragrohr 1 verstaut sein.

Statt eines derartigen Anzeigeelements kann im Tragrohr 1 aber auch ein stabförmiges Leuchtelement, z.B. eine Leuchtröhre oder ein LED-Element, untergebracht sein, das dem Tragrohr 1 entnommen und an ihm befestigt wird oder das ähnlich wie eine Teleskopstange ausziehbar ist. Wenn das Tragrohr 1 zur Aufnahme von Anzeigeelementen oder Leuchtelementen oder anderem dient, ist es von Vorteil, wenn es am unteren Ende verschlossen oder z.B. mittels eines Schraubdeckels verschliessbar ist. Auch am oberen Ende kann ein Schraubdeckel oder anderer Verschluss vorgesehen sein.

Statt einem Anzeigeelement oder Leuchtelement oder zusätzlich kann das Tragrohr auch einen Ballaststab aufnehmen, der das Stativ besser dagegen sichert, durch mechanische Einwirkung, z.B. Windkräfte umgeworfen zu werden. Der Ballaststab kann zur noch besseren Stabilisierung am unteren Ende zugespitzt sein und, etwa unter Einsatz einer stabförmigen, am oberen Ende in das Tragrohr eingeführten überstehenden Rammhilfe, mittels eines Hammers o.dgl. in den Boden getrieben werden, falls die Bodenbeschaffenheit dies zulässt.

### Bezugszeichenliste

- 1: Tragrohr
- 2: Gleithalterung
- 3: Arretierung
- 4a,b,c: Beine
- 5a,b,c: Streben
- 6: Mantel
- 7a,b: Teleskopstangen

## Patentansprüche

1. Zusammenlegbares Stativ mit einem Mittelteil, welches aus einer Tragstange und einer längs derselben verschiebbaren Gleithalterung (2) besteht, mit mindestens drei klappbaren Beinen (4a, 4b, 4c), welche jeweils ein mit dem Mittelteil drehbar verbundenes inneres Ende und ein freies äusseres Ende aufweisen sowie mit Streben (5a, 5b, 5c), deren jede an einem äusseren Ende an einem der Beine (4a; 4b; 4c) angelenkt und an einem inneren Ende mit dem Mittelteil drehbar verbunden ist, **dadurch gekennzeichnet, dass** ein inneres Ende eines Beines (4a, 4b, 4c) jeweils an der Gleithalterung (2) angelenkt ist, während das innere Ende einer Strebe (5a, 5b, 5c) jeweils an der Tragstange angelenkt ist.

2. Stativ nach Anspruch 2, **dadurch gekennzeichnet, dass** die Anlenkpunkte der Streben (5a, 5b, 5c) an den Beinen (4a; 4b; 4c) jeweils etwa um die Länge der Strebe (5a, 5b, 5c) vom äusseren Ende des Beines (4a; 4b; 4c) entfernt sind.

3. Stativ nach Anspruch 1 oder 2, **dadurch gekennzeichnet, dass** die Anlenkpunkte der Streben (5a, 5b, 5c) an der Tragstange an einem unteren Ende der Tragstange liegen.

4. Stativ nach einem der Ansprüche 1 bis 3, **dadurch gekennzeichnet, dass** es mindestens ein flexibles Verbindungselement umfasst, welches jeweils benachbarte der mindestens drei Beine (4a, 4b, 4c), an einem vom inneren Ende jedes Beines (4a; 4b; 4c) beabstandeten Bereich am Bein (4a; 4b; 4c) angreifend, miteinander verbindet.

5. Stativ nach Anspruch 4, **dadurch gekennzeichnet, dass** die Verbindung zwischen benachbarten der Beine (4a, 4b, 4c) jeweils eine solche Länge aufweist, dass bei maximaler Spreizung der Beine eine elastische Deformation eintritt, welche sich bei weiterem Hochschieben der Tragstange entspannt.

6. Stativ nach Anspruch 5, **dadurch gekennzeichnet, dass** das mindestens eine Verbindungselement aus einem elastisch dehnbaren Material besteht.

7. Stativ nach einem der Ansprüche 4 bis 6, **dadurch gekennzeichnet, dass** ein einziges Verbindungselement vorgesehen ist, welches als die Beine (4a, 4b, 4c) aussen umgebender Mantel (6) aus biegsamem flächigen Material ausgebildet ist, mit einer zentralen Öffnung, durch welche die Tragstange ragt.

8. Stativ nach einem der Ansprüche 1 bis 7, **dadurch gekennzeichnet, dass** die Gleithalterung (2) eine lösbare Arretierung (3) aufweist, mittels welcher ihre Lage an der Tragstange fixierbar ist.

9. Stativ nach einem der Ansprüche 1 bis 8, **dadurch gekennzeichnet, dass** die Tragstange hohl, d.h. als Tragrohr (1) ausgebildet ist.

10. Stativ nach Anspruch 9, **dadurch gekennzeichnet, dass** das Tragrohr (1) mindestens eine ausziehbare Teleskopstange (7a, 7b) enthält.

11. Stativ nach Anspruch 9 oder 10, **dadurch gekennzeichnet, dass** das Tragrohr (1) mindestens ein Anzeigeelement enthält.

12. Stativ nach Anspruch 11, **dadurch gekennzeichnet, dass** das Anzeigeelement als zusammengerolltes oder zusammengefaltetes flächiges Element ausgebildet ist.

13. Stativ nach Anspruch 12, **dadurch gekennzeichnet, dass** das Anzeigeelement dreieckig ausgebildet ist, seine Grösse mindestens der Grösse eines von zwei benachbarten der Beine (4a, 4b, 4c) begrenzten Feldes entspricht und dass es an einem oberen Ende einen Haken und an einem gegenüberliegenden unteren Rand einen sich über die Länge des Randes erstreckenden elastisch biegsamen Randstab aufweist, welcher an seinen Enden gegabelt ist.

14. Stativ nach Anspruch 9 oder 10, **dadurch gekennzeichnet, dass** das Tragrohr (1) mindestens ein Leuchtelement enthält.

15. Stativ nach einem der Ansprüche 9 bis 14, **dadurch gekennzeichnet, dass** das Tragrohr (1) mindestens einen Ballaststab enthält.
